# EUROPÄISCHE PATENTSCHRIFT

(11) **EP 0 601 335 B1**
(45) Veröffentlichungstag und Bekanntmachung des Hinweises auf die Patenterteilung: **20.03.1996**
(21) Anmeldenummer: 93117938.6
(22) Anmeldetag: 05.11.1993
(51) Int. Cl.: E04B 1/76, E06B 7/10, F24F 5/00

(54) **Querlüftung eines mit einer Gebäudehülle versehenen Gebäudes**
Ventilation for a building with a curtain wall
Ventilation d'un bâtiment pourvu d'un mur rideau

(30) Priorität: 12.11.1992 DE 4238135
(43) Veröffentlichungstag der Anmeldung: 15.06.1994
(73) Patentinhaber: ALCO-Systeme GmbH, D-48163 Münster (DE)
(72) Erfinder: Raatschen, Willigert, Dr.-Ing., D-88090 Immenstadt (DE)
(74) Vertreter: Habbel, Hans-Georg, Dipl.-Ing.

(56) Entgegenhaltungen:
- EP-A- 0 467 876
- EP-A- 0 481 217
- DE-A- 3 928 259

## Beschreibung

Die Erfindung bezieht sich auf ein Bauwerk mit einer der Gebäudeaußenwand vorgelagerten Gebäudehülle gemäß dem Oberbegriff des Hauptanspruches.

Ein gattungsbildendes Bauwerk ist in der EP-A-481 217 beschrieben. Bei dieser Anordnung wird die Thermosyphonwirkung innerhalb des sich zwischen der Gebäudeaußenwand und der die Gebäudeaußenwand umgebenden Gebäudehülle befindenden Raumes zur Belüftung ausgenutzt.

In der EP-A-90 794 wird ein Bauwerk beschrieben, wobei die zwischen der Wetterschutzzone und der statischen Schichtzone angeordnete Luftschicht nicht abgeschlossen ausgebildet ist, sondern die Wetterschutzzone wird aus mehreren einzelnen, horizontal gegeneinander versetzt angeordneten Außenverkleidungsplatten gebildet, so daß sich in dieser Luftschicht keine wesentliche Thermik bei Wärmeeinstrahlung ausbilden kann. Im Bereich der Fenster ist diese Luftschicht sowieso dann unterbrochen, wenn die Beschattungsvorrichtung herabgelassen ist. Die Wetterschutzzone ist im Bereich der Fenster unterbrochen, und das im Bereich der statischen Schichtzone bzw. der Wärmedämmzone angeordnete Fenster steht also mit seiner Außenseite unmittelbar mit der Umgebungsluft des Bauwerkes in Verbindung. Diese bekannten Anordnungen weisen daher üblicherweise kein zu öffnendes Fenster auf, sondern die Klimatisierung des Gebäudeinnenraumes erfolgt durch eine Klimaanlage.

In der DE-A-25 19 658 wird eine zweischalige Fassadenkonstruktion beschrieben, bei welcher die innere Schale als fest geschlossener, luftdichter Fassadenteil ausgebildet ist. Vor dieser inneren Schale ist eine Außenfassade angeordnet, bei der der so gebildete Zwischenraum an eine Luftzufuhr und einen Luftauslaß angeschlossen ist. Die in diesem Zwischenraum gefüllte Luft kann klimatisiert werden.

Aus der DE-A-24 07 865 ist ein Fassadenelement bekanntgeworden, durch dessen Einsatz ebenfalls eine Klimahülle geschaffen werden soll. In dieser Fassade ist auch ein Fenster vorgesehen, dessen Fensterzwischenraum mit dieser Klimahülle in Verbindung steht. Die Gesamtheit aus Außen- und Innenfenster kann geöffnet werden, wobei dann aber eine Unterbrechung zur luftführenden Schicht erfolgt, eine Belüftung des Gebäudeinneren aus dem zwischen Außen- und Innenfassade gebildeten Zwischenraum ist nicht möglich.

Aus der DE-A-22 31 972 ist es bekannt, vor der Außenwand eines Gebäudes mit geringem Abstand ein einen großen Strahlungskoeffizienten aufweisendes Fassadenelement vorzusehen, wobei der Zwischenraum zwischen der Außenwand und dem Fassadenelement ständig mit dem Unterteil des Aufenthaltsraumes verbunden ist. Der Zwischenraum zwischen Außenwand und Fassadenelement ist aber nicht im unteren Bereich mit der Außenluft verbunden, so daß hier im Prinzip nur ein geschlossener Kreislauf geschaffen wird.

In der EP-A-467 876 wird ein Hochhaus mit einem zwischen Kernwand und Gebäudehülle befindlichen Hinterlüftungs-Zwischenraum vorgeschlagen. Der in dem Hinterlüftungs-Zwischenraum herrschende natürliche Auftrieb, die sogenannte "Thermo-Syphon-Wirkung", wird dazu ausgenutzt, um aus dem Gebäude verbrauchte Luft abzusaugen.

Aus der EP-A-481 217 ist eine ähnliche Einrichtung bekannt.

In der DE-A-39 28 259 wird ein luftführendes Fensterelement beschrieben, bei welchem u. a. bei dem sogenannten Abluftbetrieb des Fensters die Raumluft in einen zwischen zwei Fensterscheiben befindlichen Glaskanal dadurch eingeführt wird, daß die Luft an der oberen Auslaßöffnung des Glaskanales in einen Abluftabsaugkanal zwangsgeführt wird. Eine Thermosyphonwirkung ist bei diesem luftführenden Fensterelement nicht vorgesehen, so daß keine gezielte Ausnutzung der natürlichen Auftriebskräfte gegeben ist.

Auf der der Sonne zugewandten Fassadenseite sind üblicherweise in dem Fassadenzwischenraum Sonnenschutzvorrichtungen angeordnet, die bei solarer Einstrahlung eine große Aufheizung der Luft im Bereich der Strömungsschächte und der Fensterkästen bewirken. Wird nun zu Lüftungszwecken auf dieser Gebäudeseite eine große Öffnung, z. B. ein Fensterflügel, im Bereich der Gebäudeaußenwand geöffnet, kommt es zu einem intensiven Luftaustausch zwischen diesem Raum und dem Fensterkasten, so daß nahezu die gesamte, im Fensterkasten absorbierte Wärme in den Raum gelüftet wird und entweder zu unbehaglichen Raumlufttemperaturen führt oder eine evtl. vorhandene Klimaanlage stark belastet.

Der Erfindung liegt demgegenüber die Aufgabe zugrunde, eine gute Innenbelüftung des Gebäuderaumes zu erreichen.

Diese der Erfindung zugrundeliegende Aufgabe wird durch den Kennzeichnenden Teil des Hauptanspruches gelöst.

Vorteilhafte Ausgestaltungen sind in den Unteransprüchen erläutert.

Mit anderen Worten ausgedrückt wird gemäß der Erfindung vorgeschlagen, daß durch zweckmäßige Steuerung der luftführenden Öffnungen und unter gezielter Ausnutzung der natürlichen Auftriebskräfte über eine sich einstellende Querlüftung der Luftaustausch im Sommer erhöht wird, der Eintritt von relativ kühler Außenluft auf der sonnenabgewandten Seite in das Gebäude ermöglicht wird, daß aber andererseits auf der sonnenzugewandten Gebäudeseite kein Eintritt der erwärmten Luft aus dem Raum zwischen der Gebäudeaußenwand und der Gebäudehülle, also aus dem Fassadenzwischenraum in den Gebäuderaum erfolgt.

Bei großen Öffnungen, wie, sie u. a. Fenster darstellen, kommt es zu bidirektionalen Strömungen sobald kleinere Temperaturdifferenzen zwischen beiden Seiten der Öffnung bestehen und die neutrale Zone sich im Bereich der Öffnungsfläche befindet. Die Lage dieser neutralen Zone ist aber beeinflußbar, wenn man sich gemäß der Erfindung den thermischen Auftrieb in den Strömungsschächten zunutzemacht.

Wegen der auf der sonnenzugewandten Fassadenseite hohen Schachttemperaturen entsteht dort ein heftiger Auftrieb. Wird der Schacht im unteren Bereich nach außen hin geschlossen, so saugt der Schacht je nach Höhe und Temperatur die Luft verstärkt aus dem Raum durch den Fensterkasten und die Überströmöffnung in den Schacht, wo sie über die obere Schachtöffnung ins Freie strömt. Wird nunmehr die Lage, Größe und Höhe der Öffnung an der Gebäudeaußenwand - d. h. also die Öffnung, die vom Fensterkasten in den Gebäudeinnenraum führt - so bemessen, daß die neutrale Zone oberhalb des Öffnungsquerschnittes liegt, ist damit sichergestellt, daß keine aufgewärmte Fensterkastenluft in den Gebäudeinnenraum gelangt, sondern nur Luft aus dem Gebäudeinnenraum über den Fensterkasten in den Strömungsschacht strömt. Auf den sonnenabgewandten Gebäudeseiten muß eine möglichst widerstandsfreie Nachströmung von Luft ermöglicht werden.

Aufgrund dieser Querlüftung kommt es auf der sonnenzugewandten Fassadenseite zu einer Abfuhr der im Fassadenzwischenraum absorbierten Solarenergie nach außen und somit wegen der reduzierten Wärmetransmission ins Gebäude zu einer Verringerung der Kühllast.

Damit der Winddruck auf der sonnenzugewandten Seite der Querlüftung nicht entgegenwirkt, werden dort alle Außenfugen der Fensterkästen geschlossen. Weiterhin werden die Schachtenden auf der sonnenzugewandten Seite z. B. über einen düsenartigen Aufsatz so ausgebildet, daß der Wind unabhängig von der Richtung immer einen Unterdruck erzeugt und damit die Querlüftung unterstützt.

Auf den sonnenabgewandten Seiten können die Schachtenden so ausgeführt werden, daß dort der Wind unabhängig von der Richtung immer einen überdruck erzeugt, was z. B. über ein passiv oder aktiv in den Wind positioniertes Staurohr oder ähnliches erfolgen kann.

Die Nutzung der eingestrahlten Solarenergie kann während kühlerer Wettersituationen unter Berücksichtigung der thermischen Behaglichkeit der Bewohner über eine weitere Öffnung im oberen Fensterkastenbereich erzielt werden. Die Temperaturdifferenz zwischen dem Gebäudeinneren und dem eigentlichen Fensterkasten sorgt dann für einen einstellbaren Luftaustausch, wobei nicht kalte Außenluft, sondern im Fensterkasten aufgewärmte Luft in den Raum strömt.

Hierbei ist es sehr sinnvoll, die eigentliche, dem Gebäudeinnenraum zugewandte Fensterscheibe als Isolierglasscheibe auszubilden, so daß dadurch eine thermische Abschottung gegenüber dem ggf. heißeren Fensterkasteninnenraum erfolgt.

Die Nutzung der solaren Strahlungsenergie kann während kühlerer Wettersituation noch dadurch verbessert werden, daß der Sonnenschutz auf einer Seite stark strahlungsabsorbierend ausgeführt wird, z. B. über die Art der Beschichtung und auf der anderen Seite stark reflektierend. Bei kühlem Wetter ist die strahlungsabsorbierende Seite der Sonne zugewandt, bei warmem Wetter die reflektierende Seite. Diese Art des Sonnenschutzes wäre z. B. mit üblichen Lamellenkonstruktionen mit entsprechender Mechanik leicht realisierbar.

Ausführungsbeispiele der Erfindung werden nachfolgend anhand der Zeichnungen erläutert. Die Zeichnungen zeigen dabei in
- Fig. 1: zur Verdeutlichung der neutralen Zone eine geöffnete Tür innerhalb eines Gebäuderaumes, in
- Fig. 2: in einer schaubildlichen Darstellungsweise die sonnenzugewandte Gebäudeseite, die gemäß der Erfindung ausgebildet ist, in
- Fig. 3: eine Darstellung gemäß Fig. 2 der sonnenzugewandten Gebäudeseite im Winter, um die Solarwärme in den Gebäudeinnenraum zu holen, in
- Fig. 4: schematisch einen düsenartigen Schachtaufsatz, der auf die obere Schachtöffnung aufgesetzt ist und in
- Fig. 5: schematisch ein drehbares Staurohr, das auf die obere Schachtöffnung aufgesetzt ist.

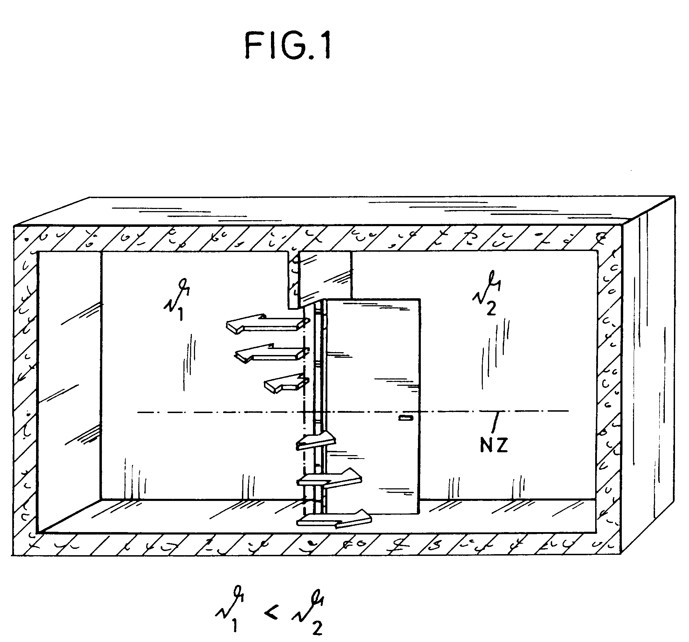

Die Fig. 1 zeigt einen Gebäudeinnenraum mit einer Trennwand und einer großen Öffnung, die als Tür ausgebildet ist. Liegen in den beiden Gebäuderäumen unterschiedliche Temperaturen vor, kommt es bei Öffnung der Tür zu einem intensiven Luftaustausch zwischen den beiden Gebäuderäumen, wobei die kühlere Luft im unteren Teil zum einen Raum strömt und die wärmere Luft im oberen Teil der Öffnung zum anderen Raum. Die Stelle der Strömungsumkehr - dort wo die Luftgeschwindigkeit zu Null wird - nennt man neutrale Zone NZ. Die Lage der neutralen Zone hängt von den Temperaturen der Öffnungsgeometrie und den Druckverhältnissen ab, die durch weitere Öffnungen in der Gebäudehülle induziert werden.

Bei großen Öffnungen, wie sie z. B. Fenster darstellen, kommt es zu den in Fig. 1 dargestellten bidirektionalen direktionalen Strömungen, sobald kleinere Temperaturdifferenzen ϑ₁< ϑ₂ zwischen den beiden Seiten der Öffnungen bestehen und die neutrale Zone NZ sich im Bereich der Öffnungsfläche befindet. Diese neutrale Zone NZ ist beeinflußbar.

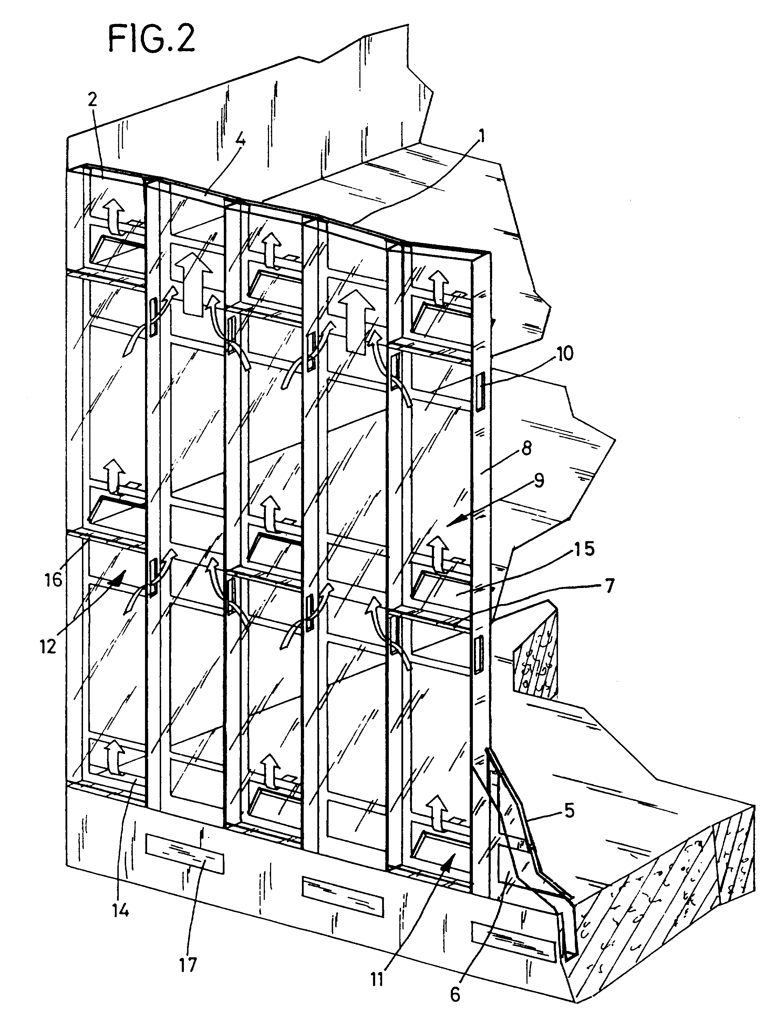

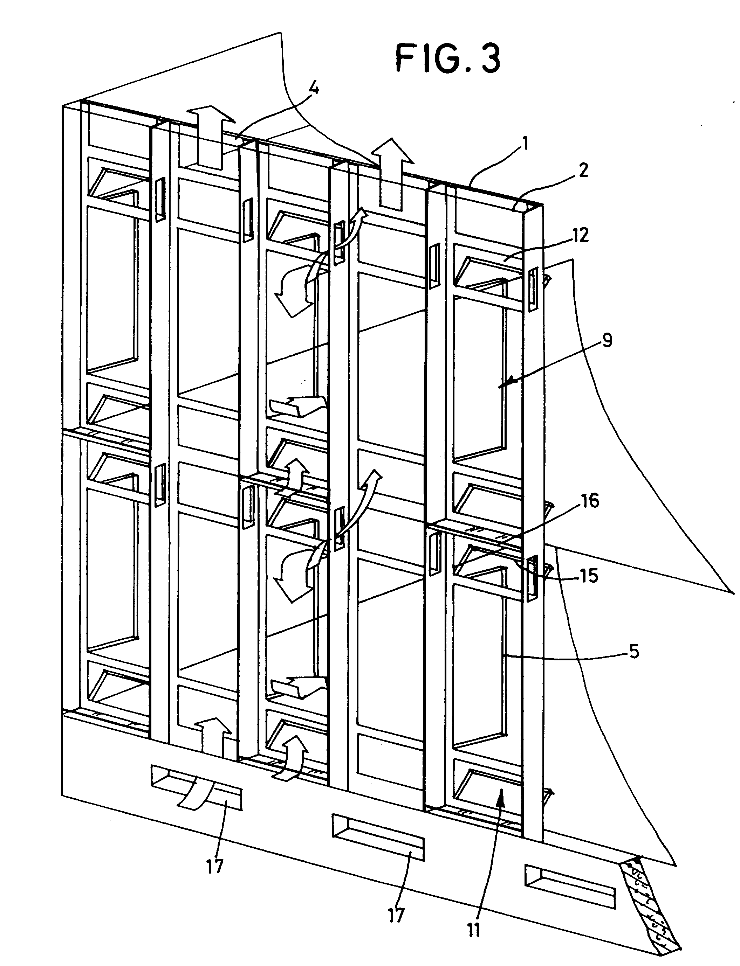

Fig. 2 zeigt schaubildlich und doch schematisch einen Ausschnitt aus einem Gebäude mit zwei übereinanderliegenden Räumen, die nach außen hin durch eine Gebäudewand begrenzt werden. Hierbei ist mit 1 die eigentliche Gebäudeaußenwand bezeichnet, der eine Gebäudehülle 2 vorgesetzt ist, wie das bei Fassaden üblich ist, so daß sich zwischen der Gebäudeaußenwand 1 und der Gebäudehülle 2 Strömungsschächte 4 bilden. Die Strömungsschächte 4 sind von unten nach oben hin durchgehend, während in den danebenliegenden Schächten Fensterkästen 9 eingesetzt sind. Diese Fensterkästen 9 werden von einem Außenfenster 6 und einem Innenfenster 5 gebildet, wobei das Innenfenster 5 - wie dies Fig. 3 zeigtgeöffnet werden kann, während das Außenfenster 6 feststehend in der Fassadenfläche ausgebildet ist. Vorzugsweise ist das Innenfenster 5 aus Isolierglas aufgebaut, so daß eine Wärmeisolation zwischen dem Fensterkasten und dem Gebäudeinnenraum geschaffen wird.

Die Fensterkästen 9 werden durch vertikale Schotten 8 und horizontale Schotten 7 abgegrenzt, wobei diese horizontalen Schotten 7 und vertikalen Schotten 8 auch aus Glas bestehen können. In den vertikalen Schotten 8 sind ggf. in ihrer Öffnungsgröße regelbare Überströmöffnungen 10 vorgesehen, durch die der Raum des so gebildeten Fensterkastens 9 mit den Schächten 4 in Verbindung steht.

Die Strömungsschächte 4 weisen im unteren Bereich nach außen hingerichtete Schachtöffnungen 17 auf, die - wie dies in Fig. 2 dargestellt ist - geschlossen sind oder - wie in Fig. 3 beim linken Schacht dargestellt - geöffnet sind.

Unterhalb der Innenfenster 5 sind in den Fensterkästen Lüftungsöffnungen 11 angeordnet, die - wie dies Fig. 2 und Fig. 3 zeigen - als Kippfenster 15 ausgebildet sein können oder die auch - wie dies Fig. 2 ganz links zeigt - als Lüftungsschieber 14 gestaltet sind, durch die aber bei geschlossenem Innenfenster 5 eine Luftverbindung zwischen dem eigentlichen Fensterkasten 9 und dem Gebäudeinnenraum geschaffen werden kann.

Oberhalb der Innenfenster 5 sind im Bereich der Fensterkästen Lüftungsöffnungen 12 vorgesehen, die ebenfalls als Kippfenster 15 ausgebildet sein können (Fig. 3) oder als Lüftungsschieber 14 ausgebildet sind.

Außerdem sind in der Gebäudehülle 2 im Bereich der horizontalen Schotten 7 Lüftungsfugen 16 vorgesehen, die vom Inneren des Gebäudes her geöffnet und geschlossen werden können. Hierdurch kann eine luftführende Verbindung zwischen Fensterkasten 9 und außen hergestellt werden.

Die Wirkungsweise dieser vorbeschriebenen Einrichtung gemäß Fig. 2 ist wie folgt:
Aufgrund der Sonneneinstrahlung wird die Gebäudehülle 2 auf der sonnenzugewandten Seite erhitzt, so daß die Luft sich in den Strömungsschächten 4 erwärmt und zu einer Auftriebsströmung führt. Wird - wie dies in Fig. 2 dargestellt ist - der Schacht im unteren Bereich nach außen hin geschlossen, so saugt der Strömungsschacht 4 je nach Höhe und Temperatur die Luft verstärkt aus dem Gebäuderaum durch den Fensterkasten 9 und die Überströmöffnung 10 in den Strömungsschacht 4, wo sie über die obere Schachtöffnung ins Freie strömt. Ein Ansaugen von Luft über die Überströmöffnungen 10 ist aber nur möglich, wenn der Fensterkasten 9 eine Verbindung mit dem Gebäudeinnenraum hat. Wird nunmehr bei geschlossenem Innenfenster 5 die Lage, Größe und Höhe der Lüftungsöffnung 11, d. h. des unterhalb des Innenfensters 5 befindlichen Kippfensters 15 oder des Lüftungsschiebers 14 so bemessen, daß die neutrale Zone oberhalb des Öffnungsquerschnittes liegt, ist damit sichergestellt, daß keine aufgewärmte Luft aus dem Bereich des Fensterkastens 9 in den Gebäudeinnenraum gelangenkann, sondern nur Luft aus dem Gebäudeinnenraum über den Fensterkasten 9 und die Überströmöffnung 10 in den Strömungsschacht 4 gesaugt werden kann. Auf der sonnenabgewandten Gebäudeseite muß eine möglichst widerstandsfreie Nachströmung der Luft ermöglicht werden.

In Fig. 3 ist anhand der Anordnung gemäß Fig. 2 die Nutzung der eingestrahlten Solarenergie dargestellt. In diesem Fall werden die Lüftungsöffnungen 12 oberhalb der Innenfenster 5 geöffnet, so daß nunmehr die Temperaturdifferenz zwischen dem Gebäudeinneren und dem eigentlichen Fensterkasten 9 dafür sorgt, daß im Fensterkasten 9 aufgewärmte Luft in den Gebäudeinnenraum strömt. In Fig. 3 ist auch dargestellt, daß die Innenfenster 5 geöffnet werden können, so daß hier stets ein Abtransport der sich am Außenfenster 6 erwärmenden Luft erfolgen kann.

In Fig. 3 ist auch dargestellt, daß die Möglichkeit besteht, daß die Schachtöffnungen 17 geöffnet werden können, wodurch der Auftrieb in den Strömungsschächten 4 reguliert werden kann.

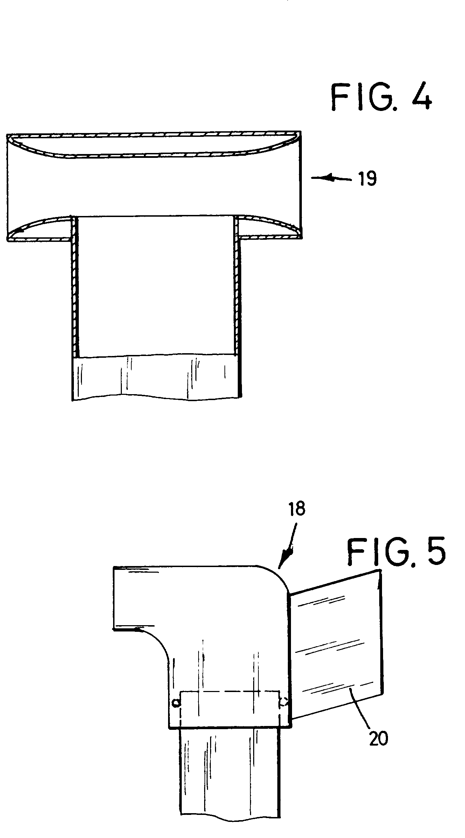

Damit der Winddruck auf der sonnenzugewandten Seite den Auftrieb in den Strömungsschächten 4 nicht behindert, werden dort die in Fig. 2 erkennbaren Lüftungsfugen 16 geschlossen die oberen Schachtenden der Strömungsschächte 4 können mit düsenartigen Aufsätzen versehen werden, die dafür sorgen, daß auch im Bereich der oberen Schachtöffnung ein Unterdruck erzeugt wird. Ein solcher düsenartiger Schachtaufsatz 19 ist in Fig. 4 dargestellt.

Will man umgekehrt kühlere Luft durch die Strömungsschächte 4 zu den Fensterkästen führen, kann es vorteilhaft sein, auf die oberen Schachtöffnungen Staurohre 18 aufzusetzen, die ständig dafür sorgen, daß in den Strömungsschächten ein Überdruck herrscht. Die Staurohre 18, die drehbar gelagert sind, richten sich dabei ähnlich einer Wetterfahne stets mit ihrer Öffnung in den Wind und sind mit wetterfahnenähnlichen Leitvorrichtungen 20 ausgerüstet.

## Patentansprüche

1. Bauwerk mit einer der Gebäudeaußenwand (1) vorgelagerten Gebäudehülle (2), wobei zwischen der Außenseite der Gebäudeaußenwand (1) und der Innenseite der Gebäudehülle (2) unten und oben Ein- bzw. Austrittsöffnungen aufweisende verticale Strömungsschächte (4) ausgebildet sind und die Fenster des Bauwerkes je aus einem im Bereich der Gebäudeaußenwand (1) angeordneten Innenfenster (5) und einem feststehenden, vor dem Innenfenster (5) im Bereich der Gebäudehülle (2) angeordneten Außenfenster (6) bestehen und die beiden Fenster - Innenfester (5) und Außenfenster (6) - umgrenzende Horizontalund Vertikalschotten (7, 8) vorgesehen sind, die einen von dem Strömungsschacht (4) abgegrenzten Fensterkasten (9) schaffen, der über wenigstens eine überströmöffnung (10) mit dem oder den Strömungsschächten (4) in Verbindung bringbar ist, dadurch gekennzeichnet, daß zur Be- und Entlüftung des Gebäudeinnenraumes im unteren Bereich der Fensterkästen (9) unterhalb der Innenfenster (5) verschließbare Lüftungsöffnungen (11) vorgesehen sind.

2. Bauwerk nach Anspruch 1, dadurch gekennzeichnet, daß zur Erwärmung des Gebäudeinnenraumes im oberen Bereich der Fensterkästen (9) oberhalb der Innenfenster (5) verschließbare luftführende Öffnungen (12) vorgesehen sind.

3. Bauwerk nach Anspruch 1 oder 2, dadurch gekennzeichnet, daß bei geschlossenem Innenfenster (5) und oberen Lüftungsöffnungen (12) durch zweckmäßige Steuerung der luftführenden Öffnungen (11) und unter gezielter Ausnutzung der natürlichen Auftriebskräfte über eine sich einstellende Querlüftung der Luftaustausch im Sommer erhöht wird, der Eintritt von relativ kühler Außenluft auf der sonnenabgewandten Seite in das Gebäude ermöglicht wird, daß aber andererseits auf der sonnenzugewandten Gebäudeseite kein Eintritt der erwärmten Luft aus dem Raum zwischen der Gebäudeaußenwand (1) und der Gebäudehülle (2), also aus dem Fassadenzwischenraum in den Gebäuderaum erfolgt.

4. Bauwerk nach Anspruch 1 oder 2, dadurch gekennzeichnet, daß die Lüftungsöffnungen (11, 12) als Fenster (15) ausgebildet sind.

5. Bauwerk nach Anspruch 1 oder 2, dadurch gekennzeichnet, daß die Lüftungsöffnungen (11, 12) (bzw. Öffnungen (12)) als Lüftungsschieber (14) ausgebildet sind.

6. Bauwerk nach einem der vorhergehenden Ansprüche, dadurch gekennzeichnet, daß die Lage der neutralen Zone (NZ) der Strömung im Bereich der Lüftungsöffnungen (11) durch Veränderung der Öffnungsgröße und/oder des thermischen und wind-bedingten Auftriebs veränderbar ist.

7. Bauwerk nach einem der vorhergehenden Ansprüche, dadurch gekennzeichnet, daß im unteren Bereich der Fensterkästen (9) verschließbare Lüftungsfugen (16) in der Gebäudehülle (2) vorgesehen sind.

8. Bauwerk nach einem der vorhergehenden Ansprüche, dadurch gekennzeichnet, daß die Eintrittsöffnungen (17) der Strömungsschächte (4) verschließbar sind.

9. Bauwerk nach einem der vorhergehenden Ansprüche, dadurch gekennzeichnet, daß im Bereich der Austrittsöffnungen der Strömungsschächte (4) windabhängige Druckerzeuger für das Innere der Strömungsschächte (4) vorgesehen sind.

10. Bauwerk nach Anspruch 9, dadurch gekennzeichnet, daß der Druckerzeuger als düsenartiger Schachtaufsatz ausgebildet ist und einen Unterdruck im Strömungsschacht (4) erzeugt.

11. Bauwerk nach Anspruch 9, dadurch gekennzeichnet, daß der Druckerzeuger als Staurohr (18) ausgebildet ist und einen Überdruck im Strömungsschacht (4) erzeugt.

12. Bauwerk nach einem der vorhergehenden Ansprüche, dadurch gekennzeichnet, daß das Innenfenster (5) als zu öffnendes Fenster ausgebildet ist.

13. Bauwerk nach einem der vorhergehenden Ansprüche, dadurch gekennzeichnet, daß bei Einsatz eines Sonnenschutzes der Sonnenschutz auf einer Seite stark strahlungsabsorbierend ausgeführt ist und auf der anderen Seite stark reflektierend.

## Claims

1. Structure with a curtain wall (2) arranged in front of the exterior building wall (1), vertical flow shafts (4) which exhibit inlet and outlet openings at the bottom and top being formed between the outer side of the exterior building wall (1) and the inner side of the curtain wall (2), and the windows of the structure each comprising an inner window (5), arranged in the region of the exterior building wall (1), and a fixed outer window (6) arranged in front of the inner window (5) in the region of the curtain wall (2), and provision being made for horizontal and vertical partitions (7, 8) which bound the two windows - inner window (5) and outer window (6) - and provide a window casing (9) which is bounded by the flow shaft (4) and can be brought into connection with the flow shaft or flow shafts (4) via at least one overflow opening (10), characterized in that closable ventilation openings (11) are provided in order to ventilate and vent the building interior in the lower region of the window casings (9), beneath the inner windows (5).

2. Structure according to Claim 1, characterized in that closable air-channelling openings (12) are provided in order to heat the building interior in the upper region of the window casings (9) above the inner windows (5).

3. Structure according to Claim 1 or 2, characterized in that, with closed inner window (5) and upper ventilation openings (12), by virtue of expedient control of the air-channelling openings (11) and with specific utilization of the natural uplift forces, the air exchange in the summer is increased via cross-ventilation which occurs, and the ingress of relatively cool outside air, on the side facing away from the sun, into the building is made possible, but in that, on the other hand, on the side of the building which faces the sun, the ingress of the heated air from the space between the exterior building wall (1) and the curtain wall (2), that is to say from the facade interspace, into the building does not take place.

4. Structure according to Claim 1 or 2, characterized in that the ventilation openings (11, 12) are designed as windows (15).

5. Structure according to Claim 1 or 2, characterized in that the ventilation openings (11, 12) (or openings (12)) are designed as ventilation slides (14).

6. Structure according to one of the preceding claims, characterized in that the position of the neutral zone (NZ) of the flow in the region of the ventilation openings (11) can be changed by changing the size of the opening and/or the thermal and wind-induced uplift.

7. Structure according to one of the preceding claims, characterized in that, in the lower region of the window casings (9), closable ventilation joints (16) are provided in the curtain wall (2).

8. Structure according to one of the preceding claims, characterized in that the inlet openings (17) of the flow shafts (4) can be closed.

9. Structure according to one of the preceding claims, characterized in that, in the region of the outlet openings of the flow shafts (4), wind-dependent pressure generators are provided for the interior of the flow shafts (4).

10. Structure according to Claim 9, characterized in that the pressure generator is designed as a nozzle-like shaft attachment and generates a subatmospheric pressure in the flow shaft (4).

11. Structure according to Claim 9, characterized in that the pressure generator is designed as a pressure tube (18) and generates a superatmospheric pressure in the flow shaft (4).

12. Structure according to one of the preceding claims, characterized in that the inner window (5) is designed as a window which can be opened.

13. Structure according to one of the preceding claims, characterized in that, when a sunshade is used, the sunshade is designed to be highly radiation-absorbent on one side and to be highly reflective on the other side.

## Revendications

1. Bâtiment comportant un mur rideau (2) placé devant le mur extérieur (1) du bâtiment, des gaines (4) de circulation d'air verticales, pourvues en haut et en bas d'ouvertures d'entrée et de sortie, étant réalisées entre le côté extérieur du mur extérieur (1) du bâtiment et le côté intérieur du mur rideau (2), les fenêtres du bâtiment étant constituées chacune d'un vitrage intérieur (5) placé dans la zone du mur extérieur (1) du bâtiment et d'un vitrage extérieur (6) fixe placé devant le vitrage intérieur (5) dans la zone du mur rideau (2), et des cloisons étanches (7, 8) horizontales et verticales entourant les deux vitrages - vitrage intérieur (5) et vitrage extérieur (6) - étant prévues, lesquelles cloisons étanches créent un châssis (9) de fenêtre délimité par la gaine de circulation d'air (4) et relié, au moyen d'au moins une ouverture d'évacuation (10), à la ou les gaine(s) (4) de circulation d'air, caractérisé en ce que des ouvertures d'aération (11) obturables sont prévues dans la région inférieure des châssis (9) de fenêtre, sous le vitrage intérieur (5), pour la ventilation, par amenée et évacuation d'air, de l'espace intérieur du bâtiment.

2. Bâtiment selon la revendication 1, caractérisé en ce que des ouvertures d'amenée d'air (12) obturables sont prévues dans la région supérieure des châssis (9) de fenêtre, au-dessus du vitrage intérieur (5) pour le réchauffement de l'espace intérieur du bâtiment.

3. Bâtiment selon la revendication 1 ou 2, caractérisé en ce que, lorsque le vitrage intérieur (5) et les ouvertures d'aération (12) supérieures sont fermés, par une commande appropriée des ouvertures d'amenée d'air (11), et par une utilisation adéquate des forces ascensionnelles naturelles par l'intermédiaire d'une ventilation qui se produit, l'échange d'air est augmenté en été, l'entrée d'air extérieur relativement froid du côté opposé au soleil est rendue possible dans le bâtiment, mais par ailleurs, du côté exposé au soleil, aucune entrée de l'air échauffé provenant de l'espace compris entre le mur extérieur (1) du bâtiment et le mur rideau (2), c'est-à-dire de l'espace intermédiaire de la façade, ne se produit à l'intérieur du bâtiment.

4. Bâtiment selon la revendication 1 ou 2, caractérisé en ce que les ouvertures d'aération (11, 12) sont réalisées sous la forme de fenêtres (15).

5. Bâtiment selon la revendication 1 ou 2, caractérisé en ce que les ouvertures d'aération (11, 12) (ou les ouvertures (12)) sont réalisées sous la forme de volets de ventilation (14).

6. Bâtiment selon l'une des revendications précédentes, caractérisé en ce que la situation de la zone neutre (NZ) du flux dans le secteur des ouvertures d'aération (11) peut être modifiée en faisant varier les grandeurs d'ouverture et/ou la force ascensionnelle thermique et due au vent.

7. Bâtiment selon l'une des revendications précédentes, caractérisé en ce que des fentes d'aération (16) obturables sont prévues dans la région inférieure des châssis de fenêtre (9), dans le mur rideau (2).

8. Bâtiment selon l'une des revendications précédentes, caractérisé en ce que les ouvertures d'entrée (17) des gaines (4) de circulation d'air sont obturables.

9. Bâtiment selon l'une des revendications précédentes, caractérisé en ce que, dans le secteur des ouvertures de sortie des gaines de circulation d'air (4), des générateurs de pression dépendant du vent sont prévus pour l'intérieur des gaines de circulation d'air (4).

10. Bâtiment selon la revendication 9, caractérisé en ce que le générateur de pression est réalisé sous la forme d'un capuchon de gaine en forme de buse et produit une dépression dans la gaine de circulation d'air (4).

11. Bâtiment selon la revendication 9, caractérisé en ce que le générateur de pression est réalisé sous la forme d'un tube de Venturi (18) et produit une dépression dans la gaine de circulation d'air (4).

12. Bâtiment selon l'une des revendications précédentes, caractérisé en ce que le vitrage intérieur (5) est réalisé sous la forme d'une fenêtre ouvrable.

13. Bâtiment suivant l'une des revendications précédentes, caractérisé en ce que, lorsqu'un pare-soleil est utilisé, le pare-soleil est réalisé de façon à être fortement absorbeur de rayonnement d'un côté, et fortement réfléchissant de l'autre.
